(19) **Europäisches Patentamt / European Patent Office / Office européen des brevets**

(11) **EP 2 163 020 B1**

(12) **FASCICULE DE BREVET EUROPEEN**

(45) Date de publication et mention
de la délivrance du brevet:
**05.01.2011 Bulletin 2011/01**

(21) Numéro de dépôt: **08806021.5**

(22) Date de dépôt: **18.06.2008**

(51) Int Cl.:
**H04L 1/00** *(2006.01)*     **H03M 13/07** *(2006.01)*

(86) Numéro de dépôt international:
**PCT/FR2008/051086**

(87) Numéro de publication internationale:
**WO 2009/004248 (08.01.2009 Gazette 2009/02)**

(54) **METHODE A BASE DE CODES CORRECTEURS D'ERREURS APPLICABLE A UN FLUX DE DONNEES MULTIMEDIA A DEBIT VARIABLE**

FÜR MULTIMEDIA-DATENSTROM MIT VARBIABLER RATE GEEIGNETES VERFAHREN AUF DER BASIS VON FEHLERKORREKTURCODES

METHOD BASED ON ERROR CORRECTOR CODES, APPLICABLE TO A VARIABLE RATE MULTIMEDIA DATASTREAM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **19.06.2007 FR 0755869**

(43) Date de publication de la demande:
**17.03.2010 Bulletin 2010/11**

(73) Titulaire: **FRANCE TELECOM**
**75015 Paris (FR)**

(72) Inventeurs:
• **RIGAUDEAU, Serge**
**F-22560 Pleumeur Bodou (FR)**
• **CRESTEL, Jérôme**
**F-22300 Lannion (FR)**

(56) Documents cités:
**WO-A-01/39505     US-A1- 2007 064 707**

• **MOCHIZUKI K ET AL: "FORWARD ERROR CORRECTION FOR VISUAL COMMUNICATION SYSTEMS USING VBR CODEC" IEICE TRANSACTIONS ON COMMUNICATIONS, COMMUNICATIONS SOCIETY, TOKYO, JP, vol. E89B, no. 2, février 2006 (2006-02), pages 334-341, XP001240999 ISSN: 0916-8516**
• **"Pro-MPEG Code of Practice #3" INTERNET CITATION, [Online] 3 avril 2003 (2003-04-03), XP002308517 Extrait de l'Internet: URL:http://62.73.167.57/publications/pdf/V id-on-IP-CoP3-issue1.pdf> [extrait le 2004-12-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention se situe dans le domaine des télécommunications, et plus particulièrement dans le domaine de la transmission de flux de données multimédia.

Dans un réseau de communication de type paquets, tel qu'un réseau IP (*Internet Protocol,* ou protocole internet) par exemple, la transmission de flux de données multimédia, se présentant sous la forme de paquets de données multimédia, entre un terminal émetteur d'un flux de données multimédia et un ou plusieurs terminaux récepteurs peut être altérée en cas de dysfonctionnement d'équipements appartenant au réseau (tels que des routeurs), de parasitage de la transmission, etc. Cette altération se traduit par la perte d'un ou plusieurs paquets de données multimédia échangés entre le terminal émetteur et le terminal récepteur, perte qui entraîne une dégradation de la qualité de service.

Il est connu un mécanisme de correction d'erreurs intervenant lors de la transmission de paquets de données multimédia, qui régénère au niveau du terminal récepteur des paquets de données multimédia perdus a l'aide de paquets de données de correction. C'est la technique dite de correction d'erreurs ou *Forward Error Correction* (FEC). Un exemple de mise en oeuvre d'une telle technique est défini dans le document *Code of Practise #3 release 2* du Pro MPEG (*Moving Picture Experts Group*, ou groupe d'experts pour le codage d'images animées) Forum.

Un tel mécanisme est notamment utilisé lorsque le terminal récepteur est privé de voie de communication retour avec le terminal émetteur. En effet, dans ce cas l'utilisation d'un protocole de retransmission tel que les protocoles TCP/IP (*Transmission Control Protocol/Internet Protocol,* ou protocole de contrôle de transmission/protocole internet en français) ou RTP/RTCP (*Real-time Transport Protocol/Real-time Transport Control Protocol,* ou protocole de transport en temps-réel/ protocole de contrôle de transport en temps-réel en français) est impossible.

Dans une telle configuration, en effet, le terminal récepteur ne peut pas informer le terminal émetteur de la non-réception de certains paquets de données multimédia, interdisant ainsi toute réémission des paquets perdus. C'est le cas de flux de paquets de données multimédia diffusés à destination d'une pluralité de terminaux récepteurs aptes à les recevoir, un exemple peut être les flux TNT (Télévision Numérique Terrestre).

Une méthode à base de codes correcteurs d'erreurs telle que celle proposée par le Pro MPEG Forum consiste, au niveau du terminal émetteur, à créer une matrice de correction d'erreurs de transmission. Les paquets de données multimédia sont rangés dans la matrice de correction au fur et à mesure de leur génération, chaque paquet de données multimédia étant identifié par un numéro de séquence stocké dans son entête RTP. Deux paquets de données multimédia générés consécutivement, et donc adjacents dans la matrice de correction, sont identifiés par deux numéros de séquences consécutifs.

Une fois la matrice de correction complétée, des paquets de données de correction sont générés à partir de groupes de paquets de données multimédia. De tels groupes correspondent, par exemple, à des paquets de données multimédia constituant des lignes ou des colonnes de la matrice de correction.

Les paquets de données de correction ainsi générés forment une redondance des données des paquets de données multimédia constituant les groupes de paquets de données multimédia à partir desquels ils sont générés.

De tels paquets de données de corrections comportent également des informations permettant de reconstituer la matrice de correction au niveau du terminal récepteur.

Les paquets de données multimédia et les paquets de données de correction sont ensuite émis à destination du ou des terminaux récepteurs. Ces deux types de paquets de données font l'objet de flux de données différents afin de permettre à des terminaux récepteurs qui ne sont pas aptes à mettre en oeuvre cette méthode à base de correcteur d'erreur de pouvoir tout de même exploiter le flux de paquets de données multimédia.

Il est donc nécessaire de réserver de la bande passante supplémentaire afin d'assurer l'acheminement des paquets de données de correction, le flux de ces paquets générant un sur-débit.

Un tel sur-débit est fixé en fonction de la taille de la matrice de correction. Le sur-débit engendré par le flux de paquets de données de correction est défini par le ratio entre le nombre de paquets de données multimédia constituant la matrice de correction et les paquets de données de correction associés à cette même matrice de correction. Les dimensions de la matrice de correction étant fixes, la valeur du sur-débit est constante.

A réception des paquets de données multimédia et des paquets de données de correction, le terminal récepteur reconstitue la matrice de correction. Chaque paquet de données multimédia reçu est rangé dans la matrice de correction ainsi reconstituée à l'emplacement qui était le sien dans la matrice de correction d'origine au moyen de son numéro de séquence et d'informations supplémentaires contenues dans les paquets de données de correction.

La perte d'un paquet de données multimédia se traduit dans la matrice de correction reconstituée par un emplacement vide là où devrait se trouver le paquet de données multimédia perdu. Le paquet de données multimédia perdu est reconstruit à l'aide d'un ou plusieurs paquets de données de correction correspondants à la ligne et/ou la colonne de la matrice de correction d'origine à laquelle appartient le paquet de données multimédia perdu.

Une telle méthode s'applique principalement à des flux de paquets de données multimédia à débit constant ou CBR (*Constant Bit Rate*). Le débit du flux de paquets de données multimédia étant constant, les dimensions de la matrice de correction, définies en fonction de ce débit, sont constantes, la matrice de correction est par conséquent une matrice de taille fixe. Dans un tel cas de figure, la durée nécessaire pour générer les paquets de données de correction, durée qui correspond à la durée nécessaire pour compléter la matrice de correction, et pour réaliser la correction du flux de paquets de données multimédia reçu par le terminal récepteur est constante. De même, la latence introduite par l'application de cette méthode pour corriger un flux de données multimédia est constante. Le nombre maximum de paquets de données multimédia perdus présentant des numéros de séquence consécutifs qui peut être corrigé par application de cette méthode est également constant.

Le document "Pro-MPEG Code of Practice #3 release 2", qui peut être extrait de l'Internet, décrit un procédé de création d'une matrice de correction d'erreurs de transmission de paquets de données multimédia entre un terminal émetteur et au moins un terminal récepteur, dans lequel lesdits paquets de données multimédia constituent des éléments de ladite matrice de correction, et dans lequel lesdits paquets de données multimédia sont rangés dans la matrice de correction à intervalles de temps réguliers.

Lorsque la méthode à base de codes correcteurs d'erreur est appliquée à des flux de données multimédia à débit non constant ou VBR (*Variable Bite Rate*), les dimensions de la matrice de correction sont déterminées en fonction du débit moyen du flux de paquet de données multimédia par exemple. Les dimensions de la matrice de correction restent alors fixes jusqu'à la fin de la transmission du flux de paquets de données multimédia. De même, la valeur du sur-débit engendré par le flux de paquets de données de correction est constante.

Lorsque le débit du flux de paquets de données multimédia varie, la matrice de correction est, dans la plupart des cas, soit sous-dimensionnée soit surdimensionnée par rapport à la valeur effective du débit du flux de paquets de données multimédia.

Dans le cas de figure où la matrice de correction est sous-dimensionnée par rapport au débit du flux de paquets de données multimédia, le nombre de lignes de la matrice est inférieur au nombre maximum de paquets de données multimédia générés consécutivement qui doivent pouvoir être corrigés pour un tel débit de flux de paquets de données multimédia. Ainsi lorsque un nombre de paquet de données multimédia est égal au nombre maximum de paquets de données multimédia générés consécutivement pouvant être corrigés, ces paquets de données multimédia occupent plus d'une ligne de la matrice de correction. Si tous ces paquets de données multimédia sont perdus lors de la transmission, comme ils occupent plus d'une ligne de la matrice de correction, certaines colonnes de la matrice de correction présentent plus d'un emplacement vide. Il devient alors impossible pour ces colonnes de régénérer les paquets de données multimédia perdus à l'aide des paquets de données de correction.

Ceci entraîne une perte d'efficacité de la correction appliquée en vue de régénérer les paquets de données multimédia perdus lors de la transmission puisqu'il n'est pas possible de tous les régénérer.

Dans le cas de figure où la matrice de correction est sur-dimensionnée par rapport au débit du flux de paquets de données multimédia, la durée de remplissage d'une matrice est plus longue que si les dimensions de la matrice de correction étaient adaptées au débit du flux de paquets de données multimédia. Ainsi le temps nécessaire à l'application de la méthode à base de codes correcteur d'erreur est, dans la plupart des cas, beaucoup plus long avec une matrice surdimensionnée qu'avec une matrice adaptée au débit du flux de paquets de données multimédia.

Cette augmentation du temps nécessaire à l'application de la méthode à base de codes correcteur d'erreur est incompatible avec les exigences de qualité de service des services de diffusion de flux de données audiovisuelles, tel que le délai nécessaire à un usager recevant les flux de paquets de données multimédia pour passer d'un flux à un autre.

Ainsi, il apparaît que l'application de la méthode à base de codes correcteurs d'erreur à un flux de données multimédia à débit non constant entraîne perte d'efficacité de correction et une augmentation des délais de traitement qui sont préjudiciables à la qualité du service délivré aux usagers recevant les flux de paquets de données multimédia. De tels inconvénients rendent impropre l'utilisation de cette méthode à la correction de flux de paquets de données multimédia à débit non constant.

La diffusion de flux de paquets de données multimédia à débit non constant tendant à ce développer, il existe par conséquent un besoin grandissant des opérateurs en télécommunications pour une méthode à base de codes correcteurs d'erreurs permettant le traitement de flux de données multimédia à débit non constant qui ne présente pas de tels inconvénients.

L'invention répond à ce besoin en proposant un procédé de création d'une matrice de correction d'erreurs de transmission de paquets de données multimédia à débit non constant entre un terminal émetteur et au moins un terminal récepteur, lesdits paquets de données multimédia constituant des éléments de ladite matrice de correction.

Un tel procédé de création d'une matrice de correction d'erreurs de transmission est particulier en ce que la matrice de correction a des dimensions qui sont déterminées en fonction d'un débit maximal desdits paquets de données multimédia en entrée dudit terminal émetteur, et en ce que lesdits paquets de données multimédia sont rangés dans la matrice de correction à intervalles de temps réguliers, une absence de paquet de données multimédia constatée pour un intervalle de temps donné étant représentée dans ladite matrice de correction par un emplacement vide.

En dimensionnant la matrice de correction en fonction du débit maximal que peuvent atteindre les paquets de données multimédia en entrée du terminal émetteur, de sorte que celle-ci présente une taille fixe quel que soit le débit effectif des paquets de données multimédia, on s'assure de pouvoir traiter tous les paquets de données multimédia à émettre. Les paquets de données multimédia sont générés par un dispositif d'émission, tel qu'un encodeur de flux vidéo. La sortie de ce dispositif d'émission du flux de paquets de données multimédia est connectée en entrée du terminal émetteur.

Afin de prendre en compte les fluctuations de débit, les paquets de données multimédia sont rangés dans la matrice à intervalles de temps réguliers. La durée de cet intervalle de temps doit être inférieure ou égal à la durée séparant la réception par le terminal récepteur de deux paquets de données multimédia émis consécutivement par le dispositif d'émission lorsque le débit en entrée du terminal émetteur est maximal. Ainsi, à chaque intervalle de temps un paquet de données multimédia est rangé dans la matrice de correction. Si au cours d'un intervalle de temps, aucun paquet de données multimédia n'est généré, l'emplacement prévu dans la matrice de correction pour ce paquet de données multimédia est laissé vide. On procède ainsi jusqu'à remplissage complet de la matrice de correction. La matrice de correction ainsi obtenue est dite « matrice à trous » car l'absence de paquets de données multimédia se traduit par un vide dans la matrice de correction.

En dimensionnant la matrice en fonction du débit maximal des paquets de données multimédia et en prenant en compte les variations de ce débit lors de la création de la matrice, tout se passe comme si le flux de paquets de données traités avait un débit constant. Un tel procédé permet, par conséquent, d'appliquer la méthode des codes correcteurs d'erreurs à un flux de paquets de données multimédia à débit non constant sans être confronté aux inconvénients de l'art antérieur.

Selon une particularité du procédé de création objet de l'invention, celui-ci comprend une étape de génération de paquets de données de correction à partir desdits paquets de données multimédia rangés dans ladite matrice de correction, et une étape d'émission d'au moins un message comportant au moins un desdits paquets de données de correction et une indication sur les emplacements vides et une indication sur l'emplacement desdits paquets de données multimédia dans la matrice de correction.

Un tel message est constitué d'un ou plusieurs paquets de données de correction. Les indications sur l'emplacement des emplacements vides dans la matrice de correction ainsi que les indications sur l'emplacement des paquets de données multimédia dans la matrice de correction sont contenues dans l'entête des paquets de données de correction constituant le deuxième message.

Selon une particularité du procédé de création objet de l'invention, celui-ci comprend une étape de génération de paquets de données de correction à partir desdits paquets de données multimédia rangés dans ladite matrice de correction, une étape d'émission d'au moins un premier message comportant au moins un desdits paquets de données de correction et une indication sur les emplacements vides dans la matrice de correction et une étape d'émission d'au moins un deuxième message comprenant au moins un desdits paquets de données multimédia et une indication sur l'emplacement dudit au moins un paquets de données multimédia dans la matrice de correction.

Un tel deuxième message est constitué d'un ou plusieurs paquets de données multimédia. Les indications sur l'emplacement des paquets de données multimédia dans la matrice de correction sont contenues dans l'entête des paquets de ces données multimédia.

Dans ce mode de réalisation, le premier message ne comporte plus que les paquets de données de correction et les indications sur l'emplacement des emplacements vides dans la matrice de correction.

La mise en oeuvre de ce mode de réalisation entraîne une modification de l'entête RTP des paquets de données multimédia.

Selon une autre particularité du procédé de création d'une matrice de correction objet de l'invention, lorsque plusieurs paquets de données multimédia sont émis dans un même intervalle temporel, lesdits paquets de données multimédia sont rangés simultanément dans des emplacements adjacents de la matrice de correction.

Cette caractéristique permet de gérer l'émission en rafale de paquets de données multimédia. Une telle situation se présente lors d'une variation soudaine du débit des paquets de données multimédia.

L'invention concerne également un procédé de reconstitution d'une matrice de correction d'erreurs de transmission de paquets de données multimédia à débit non constant entre un terminal émetteur et au moins un terminal récepteur, ledit procédé comportant une étape de rangement desdits paquets de données multimédia de sorte à reconstituer ladite matrice de correction.

Un tel procédé de reconstitution d'une matrice de correction comprend, préalablement à l'étape de rangement, une étape de réception par ledit terminal récepteur d'au moins un message comprenant une indication sur l'emplacement des paquets de données multimédia et une indication sur des emplacements vides correspondant à une absence de paquets de données multimédia dans la matrice de correction.

Selon une particularité du procédé de reconstitution objet de l'invention, ledit message reçu comporte également au moins un paquet de données de correction, ledit paquet de données de correction étant généré à partir des paquets de données multimédia émis par le terminal émetteur.

Selon une autre particularité du procédé de reconstitution objet de l'invention, lors de l'étape de réception, le terminal récepteur reçoit un premier message comportant au moins un paquet de données de correction, ledit paquet de données de correction étant généré à partir des paquets de données multimédia émis par le terminal émetteur, et une indication sur les emplacements vides dans la matrice de correction, et un deuxième message comprenant au moins un desdits paquets de données multimédia et une indication sur l'emplacement dudit au moins un paquets de données multimédia dans la matrice de correction.

A l'aide des informations contenues dans le ou les messages, ainsi que des dimensions de la matrice de correction le terminal récepteur est capable de reconstituer la matrice de correction. Les dimensions de la matrice de correction sont connues du terminal récepteur par lecture de l'entête des paquets de données de corrections conformément à ce qui est défini dans le Code of Practise #3 release 2.

Une fois qu'il a identifié les éléments vides correspondant à des paquets de données multimédia perdus par détection d'une rupture de séquence dans les numéros de séquence identifiant les paquets de données multimédia et à l'aide des indications sur les emplacements vides, le terminal récepteur procède à leur reconstitution à l'aide des paquets de données de correction. On voit donc l'intérêt de ces premier et deuxième messages émis suite à la création de la matrice de correction.

L'invention concerne également un terminal émetteur de paquets de données multimédia à débit non constant, ledit terminal émetteur comportant des moyens de création d'une matrice de correction d'erreurs de transmission des paquets de données multimédia entre ledit terminal émetteur et au moins un terminal récepteur, lesdits paquets de données multimédia constituant des éléments de ladite matrice de correction.

Un tel terminal émetteur est particulier en ce qu'il comporte, en outre, des moyens de détermination des dimensions de la matrice de correction en fonction d'un débit maximal desdits paquets de données multimédia, et des moyens de rangement desdits paquets de données multimédia dans la matrice de correction à intervalles de temps réguliers, l'absence de paquets de données se traduisant par un emplacement vide dans ladite matrice de correction.

L'invention concerne également un terminal récepteur de paquets de données multimédia à débit non constant, ledit terminal récepteur comportant des moyens de reconstitution d'une matrice de correction d'erreurs de transmission desdits paquets de données multimédia entre un terminal émetteur et ledit terminal récepteur, ledit terminal récepteur comportant également des moyens de rangement desdits paquets de données multimédia de sorte à reconstituer ladite matrice de correction.

Un tel terminal récepteur est particulier en ce qu'il comporte, en outre, des moyens de réception d'au moins un premier message comprenant une indication sur l'emplacement des paquets de données multimédia, et une indication sur des emplacements vides correspondant à une absence de paquets de données multimédia dans la matrice de correction.

L'invention concerne encore un premier signal destiné à être transmis entre un terminal émetteur et au moins un terminal récepteur. Un tel premier signal est porteur d'un message comportant une indication sur un emplacement d'éléments et une indication sur des emplacements vides correspondant à une absence d'éléments dans une matrice de correction d'erreurs de la transmission de paquets de données multimédia à débit non constant entre le terminal émetteur et le terminal récepteur, lesdits paquets de données multimédia constituant les éléments de ladite matrice de correction.

D'autres caractéristiques et avantages apparaîtront à la lecture de modes de réalisation préférés décrits en référence aux dessins dans lesquels :

- la figure 1 illustre de manière schématique un système de diffusion de flux de paquets de données multimédia dans lequel l'invention est mise en oeuvre,

- la figure 2 décrit un algorithme de fonctionnement du procédé de création d'une matrice de correction selon l'invention,

- la figure 3 décrit un algorithme de fonctionnement du procédé de reconstitution d'une matrice de correction selon l'invention,

- la figure 4 illustre schématiquement un terminal émetteur dans lequel l'invention est implémentée,

- la figure 5 illustre schématiquement un terminal récepteur dans lequel l'invention est implémentée.

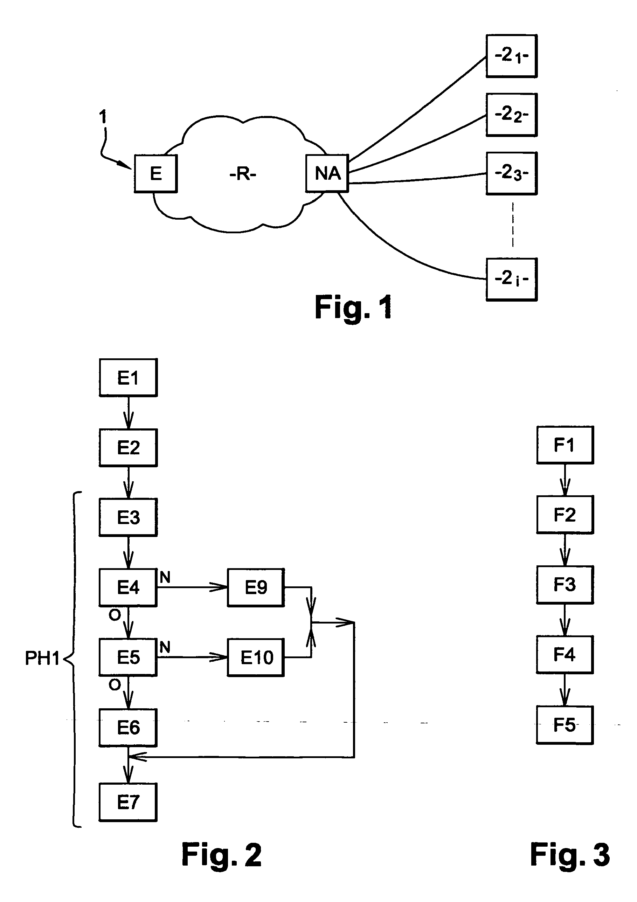

La figure 1 représente un système de diffusion dans lequel l'invention est mise en oeuvre. Sur cette figure, un terminal émetteur 1 diffuse des flux de paquets de données multimédia à débit non constant à destination d'une pluralité de terminaux récepteurs $2_i$, $i \in \{1, ..., N\}$, au travers d'un réseau de télécommunications R. Un tel réseau de télécommunications est un réseau de type paquets sans garantie d'acheminement, tel qu'un réseau IP, et peut être à support filaire, ou un réseau radiofréquence. Les terminaux récepteurs $2_i$ sont connectés au réseau R au moyen d'un noeud d'accès NA, constitué par exemple par un DSLAM (*Digital Subscriber Line Access Multiplexer*, ou multiplexeur d'accès pour ligne numérique d'abonné) lorsque des segments terminaux $10_i$, c'est à dire les segments reliant le noeud d'accès aux terminaux récepteurs $2_i$, utilisent une technologie xDSL (*Digital Subscriber Line*, ou ligne numérique d'abonné), pour offrir aux usagers une connexion haut débit. D'autres technologies peuvent être utilisées sur les segments terminaux telles que le WIFI ou encore Ethernet.

De telles technologies présentent une sensibilité aux bruits impulsifs ayant pour conséquence une perte des données transmises. Dans le cas d'un flux de paquets de données multimédia, la perte d'un paquet de données multimédia se traduit par une dégradation de la qualité de service telle que par exemple une pixellisation de l'image lorsque les données contenues dans les paquets sont des données vidéo.

Afin de résoudre le problème de perte de paquets de données multimédia, le terminal émetteur 1 met en oeuvre un procédé de création d'une matrice de correction d'erreurs de transmission M dont les éléments sont constitués par les paquets de données multimédia, rendant possible l'application de la méthode des codes correcteurs d'erreurs au traitement de paquets de données multimédia à débit non constant. Un tel procédé est décrit en référence à la figure 2.

Au cours d'une première étape E1, les dimensions de la matrice de correction M, à savoir le nombre de lignes et le nombre de colonnes que celle-ci comprend, sont déterminées en fonction d'un débit maximal auquel les paquets de données multimédia peuvent être reçus en entrée du terminal émetteur 1. Une fois obtenues, les dimensions de la matrice de correction M sont fixes.

Au cours d'une étape E2, la valeur d'un intervalle de temps $\Delta t$ correspondant au plus au délai séparant la génération, par un dispositif d'émission (non représenté sur les figures) de deux paquets de données multimédia consécutifs lorsque le débit d'émission des paquets de données multimédia est maximal, est déterminée et mémorisée dans un compteur. La sortie du dispositif d'émission est connectée en entrée du terminal émetteur 1 de sorte que le débit d'émission des paquets de données multimédia est identique au débit des paquets de données multimédia en entrée du terminal émetteur 1.

Lorsque les dimensions de la matrice de correction M et la valeur de l'intervalle de temps $\Delta t$ ont été déterminées, une phase de création PH1 de la matrice de correction est mise en oeuvre. Cette phase regroupe les étapes E3 à E7, ainsi que les étapes E9 et E10.

Au cours de l'étape E3, la valeur indiquée par le compteur est testée. Si la valeur relevée est un multiple de la valeur de l'intervalle de temps $\Delta t$ alors, le procédé exécute l'étape E4, sinon, la valeur indiquée par le compteur est testée jusqu'à ce que celle-ci corresponde à un multiple de la valeur de l'intervalle de temps $\Delta t$.

Au cours de l'étape E4, des moyens de rangement de paquets de données multimédia appartenant au terminal émetteur 1 vérifient qu'au moins un paquet de données multimédia est reçu par le terminal émetteur 1. Si aucun paquet de données multimédia n'est reçu par le terminal émetteur 1 un emplacement vide est laissé dans la matrice de correction M, ceci correspond à l'étape E9.

Si au moins un paquet de données multimédia est reçu par le terminal émetteur 1, les moyens de rangements du terminal émetteur 1 déterminent le nombre de paquets de données multimédia reçus depuis le dispositif d'émission. Si un seul paquet de données multimédia a été reçu, le procédé de création de la matrice de correction M exécute alors l'étape E6 au cours de laquelle le paquet de données multimédia reçus est rangé dans la matrice de correction M.

Si plus d'un paquet de données multimédia est reçu, le procédé de création de la matrice de correction M exécute l'étape E10. Au cours de cette étape, les paquets de données ainsi reçus sont rangés à des emplacements adjacents dans la matrice de correction M.

Dans un premier mode de réalisation de l'invention, une fois le ou les paquets de données multimédia rangés dans la matrice de correction M, l'étape E7 est exécutée. Au cours de cette étape, une indication concernant l'emplacement des paquets de données multimédia dans la matrice de correction M est stockée dans l'entête des paquets de données multimédia.

La phase de création PH1 de la matrice de correction est exécutée autant de fois que nécessaire pour remplir la matrice de correction M.

Un exemple de matrice de correction M de dimensions 4x4 obtenue conformément au précédé décrit précédemment est donné par :

$$M = \begin{bmatrix} P_1 & P_2 & Q_1 & P_3 \\ Q_2 & Q_3 & P_4 & Q_4 \\ P_5 & P_6 & P_7 & P_8 \\ Q_5 & P_9 & Q_6 & P_{10} \end{bmatrix}$$

Où $P_j$ représente un paquet de données multimédia et $Q_m$ représente un emplacement vide tel que défini à l'étape E9.

Lorsqu'un paquet de données multimédia est généré par le dispositif d'émission, il se voit attribuer un numéro de séquence qui permet de l'identifier. Deux paquets de données multimédia émis consécutivement ont des numéros de séquences qui se suivent.

Une fois la matrice de correction créée, des paquets de données de correction sont déterminés à partir de groupes de paquets de données multimédia. De tels groupes correspondent aux paquets de données multimédia constituant des lignes ou des colonnes de la matrice de correction M. L'appartenance d'un paquet de données à un groupe de données multimédia est vérifiée par son numéro de séquence.

Ainsi pour chaque ligne de la matrice de correction de données M, un opérateur logique est appliqué aux différents paquets de données multimédia. Le résultat ainsi obtenu constitue le paquet de données de correction correspondant à la ligne de la matrice traitée. Une telle opération est appliquée, dans un premier mode de réalisation de l'invention à toutes les lignes de la matrice de correction M. Dans un deuxième mode de réalisation, une telle opération est appliquée à toutes les colonnes de la matrice de correction M. Enfin dans un troisième mode de réalisation, cette opération est appliquée à toutes les lignes et à toutes les colonnes de la matrice de correction M.

Un exemple d'opérateur logique utilisé afin de générer les paquets de données de correction est l'opérateur OU exclusif ou XOR, représenté par le symbole $\oplus$ et dont la table de vérité est :

| A | B | A $\oplus$ B |
|---|---|---|
| 0 | 0 | 0 |
| 0 | 1 | 1 |
| 1 | 0 | 1 |
| 1 | 1 | 0 |

Ainsi appliqué aux paquets de données multimédia $P_1$, $P_2$ et $P_3$ appartenant à la première ligne de la matrice de correction M l'opérateur OU exclusif permet d'obtenir le paquet de données de correction $D_1$ :

$$\begin{array}{ccccccc} P_1 & \oplus & P_2 & \oplus & P_3 & = & D_1 \\ 1101 & & 1101 & & 0011 & & 0011 \end{array}$$

dans cet exemple d'application les paquets de données multimédia sont codés sur quatre bits.

L'association des paquets de données de correction avec les paquets de données multimédia correspondant peut être représentée de la manière suivante :

$$\mathbf{M} = \begin{bmatrix} P_1 & P_2 & Q_1 & P_3 \\ Q_2 & Q_3 & P_4 & Q_4 \\ P_5 & P_6 & P_7 & P_8 \\ Q_5 & P_9 & Q_6 & P_{10} \end{bmatrix} \begin{matrix} D_1 \\ D_2 \\ D_3 \\ D_4 \end{matrix}$$

$$\begin{array}{cccc} D'_1 & D'_2 & D'_3 & D'_4 \end{array}$$

Où $D_n$ représentent les paquets de données de correction associés aux n lignes de la matrice de correction d'erreurs M et $D'_p$ les paquets de données de corrections associés aux p colonnes de la matrice de correction d'erreurs M.

Une fois la matrice de correction d'erreurs M créée, et les paquets de données de correction générés, les paquets de données multimédia sont émis par le terminal émetteur 1 à destination d'une pluralité de terminaux récepteurs $2_i$. Ceci constitue un premier flux de données. Les paquets de données de correction sont émis séparément par le terminal émetteur 1, constituant ainsi un deuxième et/ou un troisième flux de données distinct du premier, selon le mode de réalisation mis en oeuvre.

En effet, les paquets de données de correction correspondant aux lignes de la matrice de correction M et les paquets de données de correction correspondant aux colonnes de la matrice de correction M font l'objet de flux séparés. Chaque paquet de données de correction contient, stockées dans son en-tête, des indications sur les emplacements vides de la ligne ou de la colonne de la matrice de correction de données à laquelle il correspond. Dans ce mode de réalisation, les indications relatives à l'emplacement des paquets de données multimédia dans la matrice de correction sont stockées en-tête de ces paquets de données multimédia.

Dans un deuxième mode de réalisation de l'invention, les paquets de données de correction comportent également stockées dans leur en-tête des indications concernant l'emplacement des paquets de données multimédia dans la matrice de correction M, ces indications n'étant alors plus stockées en en-tête des paquets de données multimédia.

Dans le premier mode de réalisation, les indications relatives à l'emplacement des paquets de données multimédia contenues dans l'en-tête des paquets de données multimédia sont par exemple les coordonnées du paquet de données multimédia dans la matrice de correction, c'est-à-dire, un numéro de ligne et un numéro de colonne. Un autre exemple d'indication relative à l'emplacement d'un paquet de données multimédia dans la matrice de correction est le numéro de séquence du premier paquet de données multimédia de la ligne ou de la colonne de la matrice de correction et le nombre d'emplacements qui séparent le paquet de données multimédia du premier paquet de données multimédia de la ligne ou de la colonne.

Concernant les indications sur les emplacements vides contenues dans les paquets de données de correction, celles-ci sont par exemple des coordonnées dans la matrice de correction.

Dans le deuxième mode de réalisation, les indications relatives à l'emplacement de paquets de données multimédia et aux emplacements vides dans la matrice de correction contenues dans l'en-tête des paquets de données de correction sont par exemple le numéro de séquence du premier paquet de données multimédia de la ligne ou de la colonne de la matrice de correction et une liste ordonnée des numéros de séquence des paquets de données multimédia appartenant à la ligne ou à la colonne en fonction de leur position dans celle-ci. Dans cette liste ordonnée, les emplacements vides sont représentés par un nombre codé en hexadécimal, par exemple le nombre FF. Ainsi la présence du nombre FF entre deux numéros de séquence signifie que les deux paquets de données multimédia identifiés par ces numéros de séquence sont séparés par un emplacement vide dans la matrice de correction.

A réception des premier et deuxième et/ou troisième flux de données, un terminal récepteur $2_i$ met en oeuvre un procédé de reconstitution de la matrice de correction M.

En référence à la figure 3, au cours d'une étape F1, le terminal récepteur $2_i$ reçoit des paquets de données multimédia et les paquets de données de correction.

Au cours d'une étape F2, les paquets de données multimédia réceptionnés sont rangés dans une matrice M' qui est la reconstitution de la matrice de correction M créée par le terminal émetteur 1. Les paquets de données multimédia sont rangés dans la matrice reconstituée M' à l'aide des indications sur leur emplacement dans la matrice de correction M contenues dans leur entête ou dans l'entête des paquets de données de correction associés selon que le premier ou le deuxième de réalisation est mis en oeuvre.

A l'issue de cette étape on obtient une première version de la matrice reconstituée M' :

$$M' = \begin{bmatrix} P_1 & P_2 & & \\ & & P_4 & \\ P_5 & & & P_8 \\ & P_9 & & \end{bmatrix}$$

Les paquets de données de correction sont traités par le terminal récepteur $2_i$ au cours d'une étape F3. Ces paquets de données de correction contiennent stockés dans leur en-tête des indications sur les emplacements vides des lignes et/ou des colonnes de la matrice de correction M.

Il est possible d'identifier les paquets de données multimédia perdus lors de la transmission des flux de données entre le terminal émetteur 1 et le terminal récepteur $2_i$, ainsi que leur emplacement dans la matrice de correction M à l'aide de leur numéro de séquence et des indications sur les emplacements vides.

Une fois les paquets de données multimédia perdus identifiés, la matrice reconstituée M' est complétée au cours d'une étape F4, de sorte qu'à l'issue de cette étape la matrice reconstituée M' définitive est obtenue et peut être représentée comme suit, toujours en référence à notre exemple :

$$M' = \begin{bmatrix} P_1 & P_2 & Q_1 & V \\ Q_2 & Q_3 & P_4 & Q_4 \\ P_5 & V & V & P_8 \\ Q_5 & P_9 & Q_6 & V \end{bmatrix}$$

où V indique un emplacement ne correspondant pas à un emplacement vide de la matrice de correction M et pour lequel aucun paquet de données multimédia n'a été reçu.

Une fois les paquets de données multimédia perdus identifiés, les paquets de données de correction à utiliser pour régénérer l'information perdues sont à leur tour identifiés.

Afin de régénérer l'information perdue, un opérateur logique est appliqué aux différents paquets de données multimédia présents dans la matrice reconstituée M' et appartenant à la même ligne ou à la même colonne que le paquet de données multimédia perdu ainsi qu'au paquet de données de correction correspondant. L'opérateur logique utilisé est le même que celui qui a été utilisé pour générer le paquet de données de correction. Le résultat ainsi obtenu correspond au paquet de données multimédia perdu.

Reprenons l'exemple des paquets de données multimédia $P_1$, $P_2$ et $P_3$ appartenant à la première ligné de la matrice de correction M. On voit dans la matrice reconstituée M' que le paquet de données multimédia $P_3$ a été perdu lors de la transmission. Afin de régénérer les informations qu'il contient, on applique l'opérateur OU exclusif aux paquets de données multimédia $P_1$ et $P_2$, qui eux, ont été reçus par le terminal récepteur $2_i$, ainsi qu'au paquet de données de correction D1 correspondant à la première ligne de la matrice de correction M :

$$\begin{array}{ccccccc} P_1 & \oplus & P_2 & \oplus & D_1 & = & P_3 \\ 1101 & & 1101 & & 0011 & & 0011 \end{array}$$

En procédant ainsi pour chaque paquet de données multimédia perdu, il est possible de régénérer l'information perdue et ainsi assurer une qualité de service satisfaisante, sachant qu'un paquet de donnée de correction correspondant à une ligne de la matrice de correction M' ne peut corriger la perte que d'un élément de cette ligne et qu'un paquet de donnée de correction correspondant à une colonne de la matrice de correction M' ne peut corriger la perte que d'un élément de cette colonne.

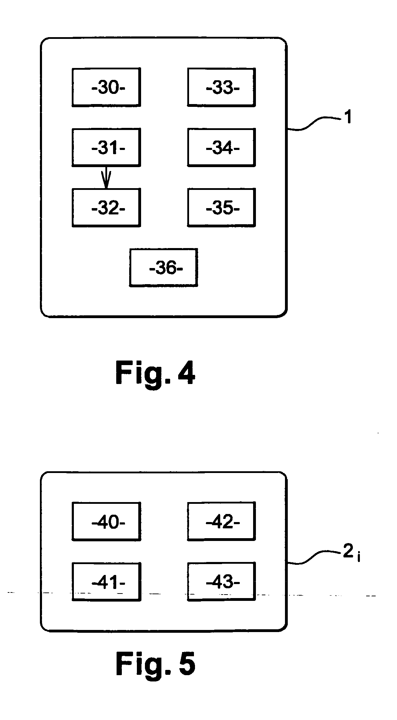

Un terminal émetteur 1 de paquets de données multimédia mettant en oeuvre le procédé de création d'une matrice de correction selon l'invention est représenté à la figure 4.

Un tel terminal émetteur 1 comporte des moyens 30 de détermination des dimensions de la matrice de correction M en fonction du débit maximal d'émission des paquets de données multimédia par le dispositif d'émission. Un tel terminal comporte également des moyens de détermination 31 de la valeur de l'intervalle de temps $\Delta t$ correspondant au délai séparant la génération de deux paquets de données multimédia consécutifs par le dispositif d'émission lorsque le débit d'émission des paquets de données multimédia par le dispositif d'émission est maximal. Cette valeur est dans un compteur 32. Les paquets de données multimédia ainsi reçus sont rangés dans la matrice de correction M à l'aide de moyens de rangement 34 tous les Δt. Une fois créée la matrice de correction M, les paquets de données de correction sont générés par des moyens de génération de paquet de données de correction 35.

Les paquets de données multimédia et les paquets de données de correction sont ensuite émis à destination d'une pluralité de terminaux récepteurs $2_i$ par des moyens d'émission 36 du terminal émetteur 1.

Un terminal récepteur $2_i$ mettant en oeuvre le procédé de reconstruction de la matrice de correction objet de l'invention est représenté à la figure 5. Un tel terminal récepteur $2_i$ comporte des moyens de réception 40 aptes à recevoir les paquets de données multimédia et les paquets de données de correction émis par le terminal émetteur 1. Une fois réceptionnées, les paquets de données multimédia sont rangés dans une matrice reconstituée M' à l'aide de moyens de rangement 41. Ces moyens de rangement 41 positionnent les paquets de données multimédia dans la matrice reconstituée M' à partir d'indications sur l'emplacement des paquets de données multimédia dans la matrice de correction M contenues dans l'en-tête des paquets de données multimédia ou dans l'en-tête des paquets de données de correction selon le mode de réalisation de l'invention mis en oeuvre. Des moyens de détermination 42 permettent d'identifier, dans la matrice reconstituée M', les paquets de données multimédia perdus lors de la transmission. Des moyens de correction 43 du terminal récepteur $2_i$ permettent de régénérer les paquets de données multimédia perdus à l'aide des paquets de données de correction correspondants.

Enfin, l'invention a aussi pour objet un programme d'ordinateur, notamment un programme d'ordinateur sur ou dans un support d'informations ou mémoire, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

**Revendications**

1. Procédé de création d'une matrice de correction d'erreurs de transmission de paquets de données multimédia à débit non constant entre un terminal émetteur et au moins un terminal récepteur, lesdits paquets de données multimédia constituant des éléments de ladite matrice de correction, **caractérisé en ce que** la matrice de correction a des dimensions qui sont déterminées en fonction d'un débit maximal desdits paquets de données multimédia en entrée dudit terminal émetteur,
et **en ce que** lesdits paquets de données multimédia sont rangés dans la matrice de correction à intervalles de temps réguliers, une absence de paquet de données multimédia constatée pour un intervalle de temps donné étant représentée dans ladite matrice de correction par un emplacement vide.

2. Procédé de création d'une matrice de correction selon la revendication 1, ledit procédé comprenant une étape de génération de paquets de données de correction à partir desdits paquets de données multimédia rangés dans ladite matrice de correction, **caractérisé en ce qu'**il comporte une étape d'émission d'au moins un message comportant au moins un desdits paquets de données de correction et une indication sur les emplacements vides et une indication sur l'emplacement desdits paquets de données multimédia dans la matrice de correction.

3. Procédé de création d'une matrice de correction selon la revendication 1, ledit procédé comprenant une étape de génération de paquets de données de correction à partir desdits paquets de données multimédia rangés dans ladite matrice de correction, **caractérisé en ce qu'**il comporte une étape d'émission d'au moins un premier message comportant au moins un desdits paquets de données de correction et une indication sur les emplacements vides dans la matrice de correction et une étape d'émission d'au moins un deuxième message comprenant au moins un desdits paquets de données multimédia et une indication sur l'emplacement dudit au moins un paquet de données multimédia dans la matrice de correction.

4. Procédé de création d'une matrice de correction selon l'une quelconque des revendications 1 à 3 **caractérisé en ce que** lorsque plusieurs paquets de données multimédia sont émis dans un même intervalle temporel, lesdits paquets de données multimédia sont rangés simultanément dans des emplacements adjacents de la matrice de correction.

5. Procédé de reconstitution d'une matrice de correction d'erreurs de transmission de paquets de données multimédia à débit non constant entre un terminal émetteur et au moins un terminal récepteur, ledit procédé comportant une étape de rangement desdits paquets de données multimédia de sorte à reconstituer ladite matrice de correction, **caractérisé en ce que** ledit procédé comprend, préalablement à l'étape de rangement, une étape de réception par ledit terminal récepteur d'au moins un message comprenant une indication sur l'emplacement des paquets de données multimédia et une indication sur des emplacements vides correspondant à une absence de paquets de données multimédia dans la matrice de correction.

6. Procédé de reconstitution selon la revendication 5, **caractérisé en ce que** ledit message reçu comporte également au moins un paquet de données de correction, ledit paquet de données de correction étant généré à partir des paquets de données multimédia émis par le terminal émetteur.

7. Procédé de reconstitution selon la revendication 5, **caractérisé en ce que** lors de l'étape de réception, le terminal récepteur reçoit un premier message comportant au moins un paquet de données de correction, ledit paquet de données de correction étant généré à partir des paquets de données multimédia émis par le terminal émetteur, et une indication sur les emplacements vides dans la matrice de correction, et un deuxième message comprenant au moins un desdits paquets de données multimédia et une indication sur l'emplacement dudit au moins un paquets de données multimédia dans la matrice de correction.

8. Terminal émetteur de paquets de données multimédia à débit non constant, ledit terminal émetteur comportant des moyens de création d'une matrice de correction d'erreurs de transmission des paquets de données multimédia entre ledit terminal émetteur et au moins un terminal récepteur, lesdits paquets de données multimédia constituant des éléments de ladite matrice de correction, **caractérisé en ce que** ledit terminal comporte, en outre, des moyens de détermination des dimensions de la matrice de correction en fonction d'un débit maximal desdits paquets de données multimédia, et des moyens de rangement desdits paquets de données multimédia dans la matrice de correction à intervalles de temps réguliers, l'absence de paquets de données se traduisant par un emplacement vide dans ladite matrice de correction.

9. Terminal émetteur selon la revendication 8, ledit terminal comprenant des moyens de génération de paquets de données de correction à partir desdits paquets de données multimédia rangés dans ladite matrice de correction, **caractérisé en ce qu'**il comporte des moyens d'émission d'au moins un message comportant au moins un desdits paquets de données de correction et une indication sur les emplacements vides et une indication sur l'emplacement desdits paquets de données multimédia dans la matrice de correction.

10. Terminal émetteur selon la revendication 8, ledit terminal comprenant des moyens de génération de paquets de données de correction à partir desdits paquets de données multimédia rangés dans ladite matrice de correction, **caractérisé en ce qu'**il comporte des moyens d'émission d'au moins un premier message comportant au moins un desdits paquets de données de correction et une indication sur les emplacements vides dans la matrice de correction et des moyens d'émission d'au moins un deuxième message comprenant au moins un desdits paquets de données multimédia et une indication sur l'emplacement dudit au moins un paquets de données multimédia dans la matrice de correction.

11. Terminal récepteur de paquets de données multimédia à débit non constant, ledit terminal récepteur comportant des moyens de reconstitution d'une matrice de correction d'erreurs de transmission desdits paquets de données multimédia entre un terminal émetteur et ledit terminal récepteur, ledit terminal récepteur comportant également des moyens de rangement desdits paquets de données multimédia de sorte à reconstituer ladite matrice de correction, **caractérisé en ce que** ledit terminal récepteur comporte des moyens de réception d'au moins un message comprenant une indication sur l'emplacement des paquets de données multimédia, et une indication sur des emplacements vides correspondant à une absence de paquets de données multimédia dans la matrice de correction.

12. Terminal de réception selon la revendication 11, **caractérisé en ce qu'**il comporte des moyens de réception d'un premier message comportant au moins un paquet de données de correction, ledit paquet de données de correction étant généré à partir des paquets de données multimédia émis par le terminal émetteur, et une indication sur les emplacements vides dans la matrice de correction, et des moyens de réception d'un deuxième message comprenant au moins un desdits paquets de données multimédia et une indication sur l'emplacement dudit au moins un paquets de données multimédia dans la matrice de correction.

13. Signal destiné à être transmis entre un terminal émetteur et au moins un terminal récepteur, **caractérisé en ce qu'**il est porteur d'un message comportant une indication sur un emplacement d'éléments et une indication sur des emplacements vides correspondant à une absence d'éléments dans une matrice de correction d'erreurs de la transmission de paquets de données multimédia à débit non constant entre le terminal émetteur et le terminal récepteur, lesdits paquets de données multimédia constituant les éléments de ladite matrice de correction.

14. Programme d'ordinateur comprenant des instructions de code de programme pour l'exécution des étapes du procédé de création d'une matrice de correction d'erreurs de transmission de paquets de données multimédia à débit non constant entre un terminal émetteur et au moins un terminal récepteur selon l'une quelconque des revendications 1 à 4 lorsque ledit programme est exécuté par un processeur.

15. Programme d'ordinateur comprenant des instructions de code de programme pour l'exécution des étapes du procédé de reconstitution d'une matrice de correction d'erreurs de transmission de paquets de données multimédia à débit non constant entre un terminal émetteur et au moins un terminal récepteur selon l'une quelconque des revendication 5 à 7 lorsque ledit programme est exécuté par un processeur.

**Claims**

1. Method of creating a matrix for correcting errors of transmission of multimedia data packets at non-constant rate between a sender terminal and at least one receiver terminal, said multimedia data packets constituting elements of said correction matrix, **characterized in that** the correction matrix has dimensions which are determined as a function of a maximum rate of said multimedia data packets at the input of said sender terminal, and **in that** said multimedia data packets are placed in the correction matrix at regular time slots, a noted absence of any multimedia data packets for a given time slot being represented in said correction matrix by an empty location.

2. Method of creating a correction matrix according to Claim 1, said method comprising a step of generating correction data packets on the basis of said multimedia data packets placed in said correction matrix, **characterized in that** it comprises a step of sending at least one message comprising at least one of said correction data packets and an indication about the empty locations and an indication about the location of said multimedia data packets in the correction matrix.

3. Method of creating a correction matrix according to Claim 1, said method comprising a step of generating correction data packets on the basis of said multimedia data packets placed in said correction matrix, **characterized in that** it comprises a step of sending at least one first message comprising at least one of said correction data packets and an indication about the empty locations in the correction matrix and a step of sending at least one second message comprising at least one of said multimedia data packets and an indication about the location of said at least one multimedia data packet in the correction matrix.

4. Method of creating a correction matrix according to any one of Claims 1 to 3 **characterized in that** when several multimedia data packets are sent in one and the same time slot, said multimedia data packets are placed simultaneously in adjacent locations of the correction matrix.

5. Method of reconstructing a matrix for correcting errors of transmission of multimedia data packets at non-constant rate between a sender terminal and at least one receiver terminal, said method comprising a step of placing said multimedia data packets so as to reconstruct said correction matrix,
**characterized in that** said method comprises, prior to the placing step, a step of reception by said receiver terminal of at least one message comprising an indication about the location of the multimedia data packets and an indication about empty locations corresponding to an absence of multimedia data packets in the correction matrix.

6. Reconstruction method according to Claim 5, **characterized in that** said message received also comprises at least one correction data packet, said correction data packet being generated on the basis of the multimedia data packets sent by the sender terminal.

7. Reconstruction method according to Claim 5, **characterized in that** during the reception step, the receiver terminal receives a first message comprising at least one correction data packet, said correction data packet being generated on the basis of the multimedia data packets sent by the sender terminal, and an indication about the empty locations in the correction matrix, and a second message comprising at least one of said multimedia data packets and an indication about the location of said at least one multimedia data packet in the correction matrix.

8. Sender terminal emitting multimedia data packets at non-constant rate, said sender terminal comprising means for creating a matrix for correcting errors of transmission of the multimedia data packets between said sender terminal and at least one receiver terminal, said multimedia data packets constituting elements of said correction matrix, **characterized in that** said terminal comprises, furthermore, means for determining the dimensions of the correction matrix as a function of a maximum rate of said multimedia data packets, and means for placing said multimedia data packets in the correction matrix at regular time slots, the absence of data packets resulting in an empty location in said correction matrix.

9.  Sender terminal according to Claim 8, said terminal comprising means for generating correction data packets on the basis of said multimedia data packets placed in said correction matrix, **characterized in that** it comprises means for sending at least one message comprising at least one of said correction data packets and an indication about the empty locations and an indication about the location of said multimedia data packets in the correction matrix.

10. Sender terminal according to Claim 8, said terminal comprising means for generating correction data packets on the basis of said multimedia data packets placed in said correction matrix, **characterized in that** it comprises means for sending at least one first message comprising at least one of said correction data packets and an indication about the empty locations in the correction matrix and means for sending at least one second message comprising at least one of said multimedia data packets and an indication about the location of said at least one multimedia data packet in the correction matrix.

11. Receiver terminal receiving multimedia data packets at non-constant rate, said receiver terminal comprising means for reconstructing a matrix for correcting errors of transmission of said multimedia data packets between a sender terminal and said receiver terminal, said receiver terminal also comprising means for placing said multimedia data packets so as to reconstruct said correction matrix, **characterized in that** said receiver terminal comprises means for receiving at least one message comprising an indication about the location of the multimedia data packets, and an indication about empty locations corresponding to an absence of multimedia data packets in the correction matrix.

12. Reception terminal according to Claim 11, **characterized in that** it comprises means for receiving a first message comprising at least one correction data packet, said correction data packet being generated on the basis of the multimedia data packets sent by the sender terminal, and an indication about the empty locations in the correction matrix, and means for receiving a second message comprising at least one of said multimedia data packets and an indication about the location of said at least one multimedia data packet in the correction matrix.

13. Signal intended to be transmitted between a sender terminal and at least one receiver terminal, **charac-**

**terized in that** it is a carrier bearing a message comprising an indication about a location of elements and an indication about empty locations corresponding to an absence of elements in a matrix for correcting errors of the transmission of multimedia data packets at non-constant rate between the sender terminal and the receiver terminal, said multimedia data packets constituting the elements of said correction matrix.

14. Computer program comprising program code instructions for the execution of the steps of the method of creating a matrix for correcting errors of transmission of multimedia data packets at non-constant rate between a sender terminal and at least one receiver terminal according to any one of Claims 1 to 4 when said program is executed by a processor.

15. Computer program comprising program code instructions for the execution of the steps of the method of reconstructing a matrix for correcting errors of transmission of multimedia data packets at non-constant rate between a sender terminal and at least one receiver terminal according to any one of Claims 5 to 7 when said program is executed by a processor.

**Patentansprüche**

1.  Verfahren zur Erzeugung einer Korrekturmatrix von Übertragungsfehlern von Multimedia-Datenpaketen mit nicht-konstanter Übertragungsrate zwischen einem Sende-Endgerät und mindestens einem Empfangs-Endgerät, wobei die Multimedia-Datenpakete Elemente der Korrekturmatrix bilden, **dadurch gekennzeichnet, dass** die Korrekturmatrix Abmessungen hat, die in Abhängigkeit von einer maximalen Übertragungsrate der Multimedia-Datenpakete am Eingang des Sende-Endgeräts bestimmt werden, und dass die Multimedia-Datenpakete in der Korrekturmatrix in gleichmäßigen Zeitabständen eingeordnet werden, wobei ein für ein gegebenes Zeitintervall festgestelltes Fehlen eines Multimedia-Datenpakets in der Korrekturmatrix durch einen leeren Speicherplatz dargestellt wird.

2.  Verfahren zur Erzeugung einer Korrekturmatrix nach Anspruch 1, wobei das Verfahren einen Schritt der Erzeugung von Korrekturdatenpaketen ausgehend von den in der Korrekturmatrix eingeordneten Multimedia-Datenpaketen enthält, **dadurch gekennzeichnet, dass** es einen Schritt des Sendens mindestens einer Mitteilung aufweist, die mindestens eines der Korrekturdatenpakete und eine Angabe über die Speicherplätze der Multimedia-Datenpakete in der Korrekturmatrix enthält.

3.  Verfahren zur Erzeugung einer Korrekturmatrix nach Anspruch 1, wobei das Verfahren einen Schritt der Erzeugung von Korrekturdatenpaketen ausgehend von den in der Korrekturmatrix eingeordneten Multimedia-Datenpaketen enthält, **dadurch gekennzeichnet, dass** es einen Schritt des Sendens mindestens einer ersten Mitteilung, die mindestens eines der Korrekturdatenpakete und eine Angabe über die leeren Speicherplätze in der Korrekturmatrix aufweist, und einen Schritt des Sendens mindestens einer zweiten Mitteilung aufweist, die mindestens eines der Multimedia-Datenpakete und eine Angabe über den Speicherplatz des mindestens einen Multimedia-Datenpakets in der Korrekturmatrix enthält.

4. Verfahren zur Erzeugung einer Korrekturmatrix nach einem der Ansprüche 1 bis 3, **dadurch gekennzeichnet, dass**, wenn mehrere Multimedia-Datenpakete in dem gleichen Zeitintervall gesendet werden, die Multimedia-Datenpakete gleichzeitig in benachbarten Speicherplätzen der Korrekturmatrix eingeordnet werden.

5. Verfahren zur Wiederherstellung einer Korrekturmatrix von Übertragungsfehlern von Multimedia-Datenpaketen mit nicht-konstanter Übertragungsrate zwischen einem Sende-Endgerät und mindestens einem Empfangs-Endgerät, wobei das Verfahren einen Schritt des Einordnens der Multimedia-Datenpakete aufweist, um die Korrekturmatrix wiederherzustellen,
**dadurch gekennzeichnet, dass** das Verfahren vor dem Einordnungsschritt einen Schritt des Empfangs durch das Empfangs-Endgerät mindestens einer Mitteilung enthält, die eine Angabe über den Speicherplatz der Multimedia-Datenpakete und eine Angabe über leere Speicherplätze enthält, die einer Abwesenheit von Multimedia-Datenpaketen in der Korrekturmatrix entsprechen.

6. Wiederherstellungsverfahren nach Anspruch 5, **dadurch gekennzeichnet, dass** die empfangene Mitteilung ebenfalls mindestens ein Korrekturdatenpaket aufweist, wobei das Korrekturdatenpaket ausgehend von den vom Sende-Endgerät gesendeten Multimedia-Datenpaketen erzeugt wird.

7. Wiederherstellungsverfahren nach Anspruch 5, **dadurch gekennzeichnet, dass** im Empfangsschritt das Empfangs-Endgerät eine erste Mitteilung, die mindestens ein Korrekturdatenpaket, wobei das Korrekturdatenpaket ausgehend von den vom Sende-Endgerät gesendeten Multimedia-Datenpaketen erzeugt wird, und eine Angabe über die leeren Speicherplätze in der Korrekturmatrix aufweist, und eine zweite Mitteilung empfängt, die mindestens eines der Multimedia-Datenpakete und eine Angabe über den Speicherplatz des mindestens einen Multimedia-Datenpakets in der Korrekturmatrix enthält.

8. Sende-Endgerät von Multimedia-Datenpaketen mit nicht-konstanter Übertragungsrate, wobei das Sende-Endgerät Einrichtungen zur Erzeugung einer Korrekturmatrix von Übertragungsfehlern der Multimedia-Datenpakete zwischen dem Sende-Endgerät und mindestens einem Empfangs-Endgerät aufweist, wobei die Multimedia-Datenpakete Elemente der Korrekturmatrix bilden, **dadurch gekennzeichnet, dass** das Endgerät außerdem Einrichtungen zur Bestimmung der Abmessungen der Korrekturmatrix in Abhängigkeit von einer maximalen Übertragungsrate der Multimedia-Datenpakete und Einrichtungen zum Einordnen der Multimedia-Datenpakete in der Korrekturmatrix in regelmäßigen Zeitintervallen aufweist, wobei die Abwesenheit von Datenpaketen sich in einem leeren Speicherplatz in der Korrekturmatrix äußert.

9. Sende-Endgerät nach Anspruch 8, wobei das Endgerät Einrichtungen zur Erzeugung von Korrekturdatenpaketen ausgehend von den in der Korrekturmatrix eingeordneten Multimedia-Datenpaketen aufweist, **dadurch gekennzeichnet, dass** es Einrichtungen zum Senden mindestens einer Mitteilung aufweist, die mindestens eines der Korrekturdatenpakete und eine Angabe über die leeren Speicherplätze und eine Angabe über die Speicherplätze der Multimedia-Datenpakete in der Korrekturmatrix enthält.

10. Sende-Endgerät nach Anspruch 8, wobei das Endgerät Einrichtungen zur Erzeugung von Korrekturdatenpaketen ausgehend von den in der Korrekturmatrix eingeordneten Multimedia-Datenpaketen aufweist, **dadurch gekennzeichnet, dass** es Einrichtungen zum Senden mindestens einer ersten Mitteilung, die mindestens eines der Korrekturdatenpakete und eine Angabe über die leeren Speicherplätze in der Korrekturmatrix aufweist, und Einrichtungen zum Senden mindestens einer zweiten Mitteilung aufweist, die mindestens eines der Multimedia-Datenpakete und eine Angabe über den Speicherplatz des mindestens einen Multimedia-Datenpakets in der Korrekturmatrix enthält.

11. Empfangs-Endgerät von Multimedia-Datenpaketen mit nicht-konstanter Übertragungsrate, wobei das Empfangs-Endgerät Einrichtungen zur Wiederherstellung einer Korrekturmatrix von Übertragungsfehlern der Multimedia-Datenpakete zwischen einem Sende-Endgerät und dem Empfangs-Endgerät aufweist, wobei das Empfangs-Endgerät ebenfalls Einrichtungen zum Einordnen der Multimedia-Datenpakete aufweist, um die Korrekturmatrix wiederherzustellen,
**dadurch gekennzeichnet, dass** das Empfangs-Endgerät Einrichtungen zum Empfang mindestens einer Mitteilung aufweist, die eine Angabe über den Speicherplatz der Multimedia-Datenpakete und eine Angabe über die leeren Speicherplätze enthält, die einer Abwesenheit von Multimedia-Datenpakete in der Korrekturmatrix entsprechen.

12. Empfangs-Endgerät nach Anspruch 11, **dadurch gekennzeichnet, dass** es Einrichtungen zum Empfang einer ersten Mitteilung, die mindestens ein Korrekturdatenpaket, wobei das Korrekturdatenpaket ausgehend von den vom Sende-Endgerät gesendeten Multimedia-Datenpaketen erzeugt wird, und eine Angabe über die leeren Speicherplätze in der Korrekturmatrix aufweist, und Einrichtungen zum Empfang einer zweiten Mitteilung aufweist, die mindestens eines der Multimedia-Datenpakete und eine Anzeige über den Speicherplatz des mindestens einen Multimedia-Datenpakets in der Korrekturmatrix enthält.

13. Signal, das dazu bestimmt ist, zwischen einem Sende-Endgerät und mindestens einem Empfangs-Endgerät übertragen zu werden, **dadurch gekennzeichnet, dass** es Träger einer Mitteilung ist, die eine Angabe über einen Speicherplatz von Elementen und eine Angabe über leere Speicherplätze aufweist, die einer Abwesenheit von Elementen in einer Korrekturmatrix von Fehlern der Übertragung von Multimedia-Datenpaketen mit nicht-konstanter Übertragungsrate zwischen dem Sende-Endgerät und dem Empfangs-Endgerät entsprechen, wobei die Multimedia-Datenpakete die Elemente der Korrekturmatrix bilden.

14. Computerprogramm, das Programmcodeanweisungen für die Ausführung der Schritte des Verfahrens zur Erzeugung einer Korrekturmatrix von Übertragungsfehlern von Multimedia-Datenpaketen mit nicht-konstanter Übertragungsrate zwischen einem Sende-Endgerät und mindestens einem Empfangs-Endgerät nach einem der Ansprüche 1 bis 4 aufweist, wenn das Programm von einem Prozessor ausgeführt wird.

15. Computerprogramm, das Programmcodeanweisungen für die Ausführung der Schritte des Wiederherstellungsverfahrens einer Korrekturmatrix von Übertragungsfehlern von Multimedia-Datenpaketen mit nicht-konstanter Übertragungsrate zwischen einem Sende-Endgerät und mindestens einem Empfangs-Endgerät nach einem der Ansprüche 5 bis 7 enthält, wenn das Programm von einem Prozessor ausgeführt wird.

**Fig. 1**

**Fig. 2**

**Fig. 3**

Fig. 4

Fig. 5